# EUROPEAN PATENT SPECIFICATION

(11) **EP 4 060 368 B1**
(45) Date of publication and mention of the grant of the patent: **18.06.2025**
(21) Application number: 21163725.1
(22) Date of filing: 19.03.2021
(51) Int. Cl.: G01S 7/292, G01S 13/931, G01S 7/35, G01S 7/41, G01S 13/58, G01S 7/295

(54) **METHODS AND SYSTEMS FOR RADAR DATA INTEGRATION**
VERFAHREN UND SYSTEME ZUR INTEGRATION VON RADARDATEN
PROCÉDÉS ET SYSTÈMES POUR INTÉGRATION DE DONNÉES RADAR

(43) Date of publication of application: 21.09.2022
(73) Proprietor: Aptiv Technologies AG, 8200 Schaffhausen (CH)
(72) Inventor: Iurgel, Uri, 42369 Wuppertal (DE); LEßMANN, Stephanie, 40699 Erkrath (DE); DOERR, Wolfgang, 51674 Wiehl (DE)
(74) Representative: Manitz Finsterwald Patent- und Rechtsanwaltspartnerschaft mbB

(56) References cited:
- EP-A1- 3 270 180
- EP-A1- 3 657 209

## Description

### FIELD

The present disclosure relates to methods and systems for determining a plurality of output data.

### BACKGROUND

Performance to safety trade-off may be a key aspect in various safety and performance critical applications such as autonomous driving.

Accordingly, there is a need to provide efficient method to determine output data with multiple safety and performance levels and to operate within that space.

EP 3 270 180 A1 relates to a signal processing apparatus for generating a range-Doppler map, the apparatus comprising: a two-dimensional fast Fourier transform (FFT) compute unit for computing a range-Doppler map; a first memory for storing a first range-Doppler map output by the two-dimensional FFT unit, wherein the apparatus further comprises: a warping unit for shifting the stored range-Doppler map; and an integrator for adding a current range-Doppler map, output by the two-dimensional FFT compute unit, and a shifted version of a previous range-Doppler map output by the warping unit.

EP 3 657 209 A1 discloses a range-direction frequency domain converting unit which converts reception video signals into signals in a range direction frequency. A hit-direction frequency domain converting unit converts the signals in the range direction frequency into signals based on the velocity and the range direction frequency so that the target Doppler frequency belongs to the same velocity bin number independently of variations in frequencies of transmission signals. A correlation unit generates signals based on the velocity separated for each of the transmission frequencies and a range after correlation. An integration unit generates band-synthesized signals based on the velocity and a range after correlation. A candidate target detecting unit detects candidate targets based on the signal intensity from the output signals of the integration unit. A target relative velocity/relative range/arrival angle calculating unit calculates the relative velocity, the relative range, and the arrival angle of the candidate targets.

### SUMMARY

The present disclosure provides a computer implemented method, a computer system and a non-transitory computer readable medium according to the independent claims. Embodiments are given in the subclaims, the description and the drawings.

The invention as claimed is directed at a radar processing.

The invention as claimed is directed at a computer implemented method according to claim 1.

According to another aspect, the second output data comprises final detections with additional angle from Doppler and variance fields.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). **It** will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein.

According to another aspect, the vehicle further comprises a radar sensor configured to acquire the sensor data.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration of a system according to various embodiments;
- Fig. 2: an illustration of system, in which the system of Fig. 1 is applied to radar applications;
- Fig. 3: a flow diagram illustrating a method for determining a plurality of output data according to the invention as claimed;
- Fig. 4: a computer system with a plurality of computer hardware components configured to carry out steps of a computer implemented method for for determining a plurality of output data according to various embodiments.

### DETAILED DESCRIPTION

According to various embodiments, a system may be provided which takes as an input current (in other words: instantaneous) data and time integrated data and provides estimates of various properties.

For example a flexible radar system using low level data (for example low level radar) for perception may be provided.

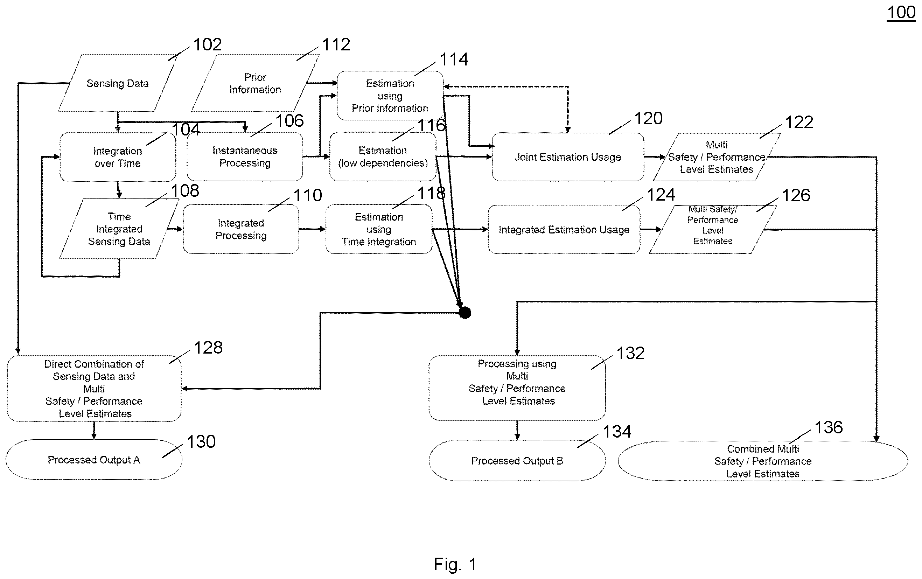

Fig. 1 shows an illustration of a system 100 according to various embodiments.

Based on sensing data 102, the sensor data acquired by the sensing may be integrated over time (in module 104) and may be provided for instantaneous processing 106. Instantaneous processing may refer to processing the data without integrating the data over time first (in other words, in instantaneous processing, the sensed data may be processed as it is, for one instance).

The time integrated data may be provided from the time integration module 104 as time integrated sensing data 108. The time integrated data may be the result of time integration, and may not (only) be instantaneous data (as opposed to the upper processing path, for example instantaneous processing module 106). The time integrated sensing data 108 may be provided to integrated processing module 110.

Prior information 112 may be provided together with the output of the instantaneous processing module 106 to a module 114 for estimation using prior information. The prior information 112 may be a generic input to enhance the estimation but builds dependencies on the prior information 112.

The output of the instantaneous processing module 106 may be provided to a module 116 for estimation with low dependencies.

The output of the module 114 for estimation using prior information may be provided to a module 120 for joint estimation usage. The output of the module 120 for joint estimation usage may be provided to the module 114 for estimation using prior information. In other words, the modules 114 and 120 may interchange information.

The output of the module 116 for estimation with low dependencies may be provided to a module 120 for joint estimation usage.

It will be understood that the module 120 is referred to as a module for joint estimation usage, because results from both blocks 114 and 116 are used.

The output of the module 120 for joint estimation usage 120 may be provided as multi safety/ performance level estimates 122.

The performance of estimation using prior information 114 may have better performance than estimation (low dependencies) 116 because it has prior information 112 available.

For our radar application, the prior information may be the target motion 212. By knowing the target motion, a better angle estimation (in 214) may be obtained, but that prior information may be slightly inaccurate or even totally wrong. For safety critical application, it may be desired to rate the safety level of this input (the prior information) and hence the estimate (of 214) may have a low safety level.

In contrast, angle estimation from beamvector 216 which may does not have this dependency may be more reliable (although the performance (variance of the estimate) may be worse).

Both outputs of angle estimation from Doppler with target motion 214 and angle estimation from beamvector 216 may be handled in parallel, and thus, the term 'multi safety level' and 'multi performance level' may be used for this property. This may get even expanded with the output from integrated angle estimation 218 merging later in the flow and having even higher performance but worse safety level.

The properties may then be plotted in a diagram of performance on x-axis and safety on y-axis. For a classical system, only one estimation path and a single entry may be available in this diagram. However, according to various embodiments, entries may be provided in this diagram and it can be moved between these entries.

Joint estimation usage 120 may be a replica of stationary / moving classification 220, where the detections are classified as stationary or certainly moving. In other words, the angle estimate(s) may be taken and used for further processing beside angle estimation itself.

It is to be noted that the figures may indicate processes as rounded rectangulars and data elements as parallelograms. For example, stationary / moving classification 220 may be the process and instantaneous detections with moving indication 222 may be the output data.

The output of the integrated processing module 110 may be provided to a module 118 for estimation using time integration.

The output of the module 118 for estimation using time integration may be provided to a module 124 for integrated estimation usage, which may use the data available at that point, which is created using time integration.

The output of the module 124 for integrated estimation usage may be provided as multi safety / performance level estimates 126. Module 124 may be similar to module 120 (like stationary / moving classification 224 and stationary/ moving classification 220).

According to various embodiments, stationary / moving classification 224 may be merged to stationary/ moving classification 220 (and furthermore, improved detections with moving indication 226 may be merged to stationary / moving classification 222), but a difference may be that one path uses time integrated data and hence, stationary / moving classification 224 may be different from stationary/ moving classification 220. Without time integration (220), the ego motion may be estimated correctly to make valid judgement on the stationary/moving classification. In contrast, in stationary / moving classification 224, the motion estimation was already used for the time integration. Therefore, stationary / moving classification 220 and stationary / moving classification 224 may be provided as separate (but related) blocks.

The output of the modules 114, 116, and 118 may be provided to a module 128 for direct combination of sensing data and multi safety / performance level estimates, which may provide a first processed output 130 (which may for example be the first output data).

The estimates 122 and 126 may be provided to a module 132 for processing using multi safety / performance level estimates, which may provide a second processed output 134 (which may for example be included in the second output data). The estimates 122 and 126 may further be provided as combined multi safety / performance level estimates 136 (which may for example be included in the second output data), which may combine the outputs of two processing chains (instantaneous, and time integration).

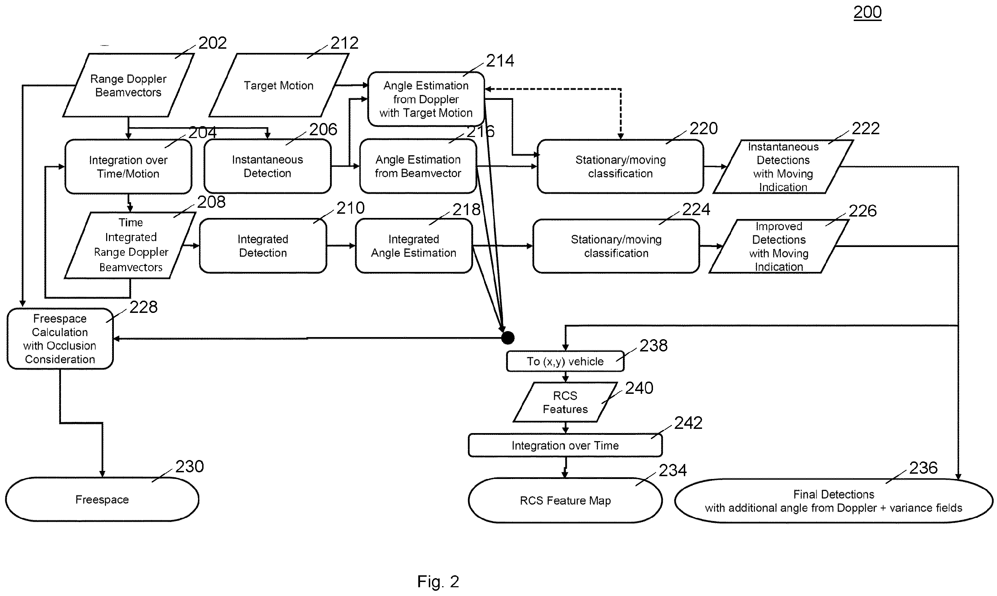

Fig. 2 shows an illustration of system 200, in which the system 100 of Fig. 1 is applied to radar applications. Various data and processing blocks of the system 200 are illustrated.

The instantaneous data 202 may correspond to the sensing data 102. The module 204 for integration over time/ motion may correspond to the module 104 for integration over time/ motion. The instantaneous detection 206 may correspond to the instantaneous processing 106.

The time integrated range Doppler beamvectors 208 may correspond to the time integrated sensing data 108. The integrated detection 210 may correspond to the integrated processing 110.

The target motion 212 may correspond to the prior information 112. The target motion 212 may be provided from an external source, for example a tracker.

The module 214 for angle estimation from Doppler with target motion may correspond to the module 114 for estimation using prior information.

The angle estimation from beamvector 216 may correspond to the estimation with low dependencies 116. The estimation of angle from a beamvector may not depend on external source and thus may have low dependencies.

The integrated angle estimation 218 may correspond to the estimation using time integration 118.

The stationary / moving classification 220 may correspond to the joint estimation usage 120. The classification of stationary and moving detection may use both the angle estimation from beamvector 216, and the angle estimation from Doppler with target motion 214.

The instantaneous detections with moving indication 222 may correspond to the multi safety / performance level estimates 122.

The stationary / moving classification 224 may correspond to the integration estimation usage 124.

The improved detections with moving indication 226 may correspond to the multi safety / performance level estimates 126, and may be referred to as "improved" since better performance may be achieved from the time integration.

Each detection in the instantaneous detections with moving indication 222 and the improved detections with moving indication 226 may carry an angle from Doppler, and angle from beamvector, and a moving indication.

The freespace calculation with occlusion consideration 228 may correspond to the direct combination of sensing data and multi safety / performance level estimates 128. For freespace calculation, an occlusion identification from processed detections (in other words, from other processing chains) may be useful. The freespace information 230 may correspond to the first processed output 130.

The module 238 for converting coordinates into (x,y) vehicle coordinates, the RCS features 240, and the integration over time 242 may correspond to the processing using multi safety / performance level estimates 132. The RCS (Radar Cross Section) value or feature 240 may be part of the detection data structure. The integration over time 242 may be provided in an RCS grid, for example supported by a detection inverse sensor model.

The RCS feature map 234 may correspond to the second processed output 134.

The final detections with additional angle from doppler and variance fields 236 may correspond to the combined multi safety / performance level estimates 136.

Classical approaches to feed occupancy grids with radar data rely on the detections as provided from the radar ECU (engine control unit). Freespace information may be created as part of the occupancy grid, but is not delivered to it as a radar measurement information. Also, statistical information about the radar cross section that are part of the detection structure as delivered by the radar may optionally be calculated inside the occupancy grid method, but is as well not provided as an input to it.

With the architecture according to various embodiments, which an occupancy grid may be fed with radar data. The architecture according to various embodiments may be referred to as radar dynamic map.

The architecture according to various embodiments may not operate on the detections, but on radar raw data: range, range rate, and beamvectors. It may encompass different processing and output parts (detections, free space, RCS map) which are usually not found together in an architecture that uses aforementioned radar raw data. The joint consideration of these parts assures a consistent output of the parts. For example, calculating radar free space based on range, range rate, beamvectors may provide enhanced results.

The architecture according to various embodiments may be very flexible and allows to estimate improved detections. This improved information may be used consistently by all other blocks (free space, RCS maps).

The architecture according to various embodiments may be implemented in a radar ECU (engine control unit), or may be implemented using a more powerful (centralized) processor, which also enables spending more calculation time to deliver improved detections.

The radar dynamic map system according to various embodiments may extract data from range Doppler beamvectors, optionally with Target Motion, into a rich set of information about the environment which may be taken as enhanced information for sub-sequent modules such as an extended dynamic occupancy grid.

The Input interface of the architecture (or system) according to various embodiments may include two elements: range Doppler beamvectors 202 and regions of interest with target motion 212.

The range Doppler beamvectors 202 may include a data cube of radar low-level-data.

The block (target motion 212) may optionally support a list of regions of interest with target motion. The list may be derived either from previous observation, from previous iterations with the current observation or from other information sources (like camera, Lidar, car-2-car communication). The region of interest may be a bounding box, a contour shape or a grid representation.

Block 212 may contain not only the motion of objects, but also where they are expected to be and where to search for them. Block 212 might contain not all objects in the field of view, but only those that are critical to the application. By doing so, a region of interest may be defined, which may not just be a list of objects but rather a value range in the parameter space used for the search.

The target motion 212 may include two properties: rigid body motion and non-rigid body motion. Rigid body motion may be used for angle estimation and classification, and the target motion may also contain variances of its motion parameters. Non-rigid body motion may be used to exclude the usage of Doppler for angle estimation; examples for non-rigid body motion may be expected Doppler spread of tires or arms/legs.

The regions of Interest may overlap. The concept of regions of interest allows also to tailor the required processing load and may be part of a cognitive radar concept. Detections outside the region of interest may also be processed, but the performance may increase as a priori information is available.

Further generic information like mounting calibration, antenna calibration and ego motion may be provided as further input.

The output of the system according to various embodiments may be termed "radar map pseudo measurement". The output may include three elements: final detections 236, freespace 230, and RCS feature map 234.

The final detections 236 may be a set of data. In addition to the existing detection interface, additional properties per detection may be provided, but the data may remain compatible to the processing flow of commonly used systems. According to various embodiments, multiple angle estimations (angle estimation from beamvector 216, angle estimation from doppler with target motion 214, and integrated angle estimation 218) may be provided, and each of them may have different properties. As such, more than one angle estimation per detection may be provided. Furthermore, variances per angle estimate may be provided for weighting. According to various embodiments, detections from different detection estimation paths may be provided, wherein a first path may be based on instantaneous range Doppler beamvector data 206, and a second path may be based on using accumulated (or integrated) range Doppler beamvector data 210.

The freespace information 230 may include information about free (in other words: unoccupied) environment.

The RCS feature map 234 may be a map (for example stored in grid cells) with statistical information about the Radar Cross Section.

The radar map pseudo measurement may be created with two detection estimation paths: an instantaneous detection estimation path (including 212, 214, 206, 216, 220, 222, based on instantaneous range Doppler beamvectors), and an integrated detection estimation path (including 204, 208, 210, 218, 224, 226, based on accumulated range Doppler beamvector data).

Each detection may store as attribute its origin and processing flow and may indicate its reliability, for example for functional safety. A detection stemming from instantaneous detection and not using target motion may have a higher functional safety class than those considering more or less reliable input sources. A multiple detection list from the various estimators may be provided. Each input data may have a certain safety level and variances. Hence, each list and detection may have different safety level and variance depending on the input sources.

Each processing stage may report its functional safety level based on the level of its input sources and the internal assumptions of the code. For example, the class may automatically be calculated from the code with some constants defined in the code, like software design/ SPICE level.

The instantaneous detection estimation path may include instantaneous detection 206, angle estimation from beamvectors 216, stationary/ moving classification 220, target motion 212, angle estimation from Doppler with target motion 214, and instantaneous detections with moving indication 222.

The instantaneous detection 206 may include peak finding in e.g. CDC (compressed data cube), i.e. estimating detections with range and range rate, but not angle. For example, the threshold of the peak to determine a valid detection may be lowered to allow to identify weaker detections (e.g. from far range), resulting in more detections comparted to the classical implementations. It is to be noted that a variety of approaches for creation of detection may be provided.

The angle estimation from beamvectors 216 may estimate the angle for the detections extracted in the previous blocks, from the beamvector. It may be implemented by classical methods as found in the radar ECU's (e.g. fast Fourier transform FFT), but also by more advanced algorithms like Capon, IAA or Machine Learning. More advanced methods may run in a centralized computer with more processing power and may produce better angle estimations. A single detection may result in multiple angle estimates from the various angle estimation methods with different weights. Each estimation may provide not only an angle estimate but also an estimate of its variance. Thus, flexibility may be provided to choose from a variety of angle estimation methods.

The stationary/ moving classification 220 may not be part of the classical radar chain for creating detections, but may reside at later processing stages.

The stationary/ moving classification 220 may identify whether a detection results from a moving object or from a stationary object. This classification may not be a binary ("1" or "0", "1/0") decision, but may result in a scalar, similar to a probability, weighting both classes. The output of this block may be referred to as stationary indication.

The weights may be used by later processing stages to interpret the different estimates, either for fusing them into a combined representation or by multiple representations like particles. This shows the interconnection between the blocks of this architecture, because the output of this stationary / moving classification block thus supports the interpretation of the output of the two angle finding blocks (for example the angle finding based on the instantaneous detections, and the angle finding based on the integrated detections).

Possible Implementations of the stationary/ moving classification 220 may include thresholding methods (for example comparing range rate and angle), and or classification based on RANSAC (wherein mounting calibration of the radars may be needed).

A block "detection to target motion matching" (which may be included in the block of stationary/ moving classification 220) may assign for each detection a target motion match, indicating how well that detection fits to the motion of the region. In case of a strong match, that target motion may be a clear indication of the motion for this detection and stationary/moving classification 220 may rely on it. **In** case of a weak match, the stationary/ moving classification 220 may have to rely only angle estimates from beamvector 216. Hence, this match may serve as weighting between both sources (for example between angle estimation from Doppler with target motion 214 and angle estimation from beamvector 216).

According to various embodiments, each detection may be verified relative to the assumed target motion. This target motion may have a direct impact on some of the angle estimated, while other angle estimates may depend only on beamvector. By comparing them, the assumed target motion for this detection may be verified. This may be done for example with a hypothesis test with the estimated values and their variances. The result may be referred to as detection to target motion match.

A mismatching target motion may be due to a general motion estimation error, but may also come from reflectors not belonging to a rigid body of the region of interest. Typical examples may be reflections from car tires and human body parts as arms and legs.

The target motion match may support the following stages for weighting the detections in processes like target motion updating, tire position estimation and human classification.

In case a detection has no region of interest assigned, and hence no target motion available, then the match may be zero by definition. This may happen for example when a new target comes into the field of view.

The detection to target motion match may also be considered in the stationary/ moving classification stage.

According to various embodiments, target motion verification may be provided. The target motion may be verified for each region of interest with their assigned detections. This verification may be based on using multiple detections, which allows to analyze systematic mismatches like the mean difference between angle estimates from differences processes. The case that a detection might come from a reflector not being part of the rigid body may be considered, and from each detection, its detection to target motion match may be used as weighting. The result of this block may be referred to as target motion likelihood.

Each detection may be matched to all available regions of interest with the information prior to angle estimation from Doppler with target motion 214, that is range, Doppler and angle estimate from beamforming (which is not shown in Fig. 2). This may lead to a list of regions of interest per detection and potentially a detection has multiple regions of interest with different matches. Each match may be a scalar, similar to a probability, but the sum of all matches may be less than unity as there is the chance to have no match to any region.

The target motion 214 of each region of interest may give the base to derive the angle from Doppler and for each matched region, a detection may be obtained. In case no region matches, then no such detection is generated. This angle estimate is not directly related to beamforming and hence provides an alternative information source which is also important in view of functional safety.

In some cases, depending on the field of view and Doppler ambiguity, the resulting angle may be ambiguous and more than one angle may be obtained, hence a detection may split in multiple detections. Each detection may carry an existence probability and the sum of existence may be one by definition.

Those multiple detections may get adjustments in weights when comparing them with the angle estimate from beamforming, so that ambiguities can be resolved.

One special region of interest may be that of stationary target which may be defined everywhere and yield angle estimates for the case of a stationary target. For this case, no external target motion may be required and the internal ego motion may be sufficient.

This may be the case if the fact that a stationary detection is provided from e.g. the block "stationary/moving classification" 220 and if that block does not rely on this block's output, and/ or if it is sufficient to calculate the additional angle estimation for stationary detections only (as opposed to all detections).

The output of the block 214 (angle estimation from Doppler with target motion) may be the estimate detection's angle and its variance, calculated from range rate, and may be provided to consuming modules in two ways:
1) as an additional output next to the angle from "classical" angle estimation techniques (so that both angle information may be provided in parallel at the output; the angle from range rate may be rarely used, because it is usually calculated only from stationary detections); and/ or
   ∘ by fusion of the angle from classical angle estimation with the angle from range rate also with detections from moving targets, i.e. not only from stationary targets.

It is to be noted that the angle estimation from Doppler with target motion 214 may require the ego vehicle's motion vector as an input.

In the integrated detection estimation path, the information from the range - range rate - beamvector data may be accumulated / integrated to provide better estimates. The integration may consider time together with ego and target motion.

A precise calculation of the ego vehicle's motion (specifically, about its travelled trajectory) may be desired to be able to spatially align subsequent data.

Calculating the detections based on such time/motion integration may be provided in the integrated detection estimation path.

The integrated detection estimation path may be able to provide better estimates of the detections, but due to inaccuracies in ego trajectory estimation, it may be less robust. Also, detection estimation on integrated data may be less mature than methods of the instantaneous detection estimation path.

The blocks in integrated detection estimation may be conceptually the same as in the instantaneous detection estimation path. However, the angle estimation block 218 in integrated detection estimation may be quite general, and may be conceived to be implemented by a variety of methods including angle estimation from antennas and angle estimation from Doppler.

From an architecture view point, it will be understood that according to various embodiments, detection estimation paths may be provided that use instantaneous information (in the instantaneous detection estimation path) and accumulated information (in the integrated detection estimation path) running in parallel. This means that both paths may be active at the same time, but as well only one of them. This may provide a high flexibility in detection processing.

The instantaneous detection estimation path and the integrated detection estimation path may enable to create of an increased number of detections, including weak detections, that represent also details of the scene. The RCS (feature) map may accumulate statistical information about the Radar Cross Section, which may be part of the data structure that is provided with each detection.

The ego vehicle's environment may be represented in the map as grid cells, where each cell stores statistical information of the RCS values (for example mean and variance, quantiles, etc.). The map may be constructed by transforming the detections' location into vehicle coordinate system, extracting the RCS information (RCS features) and updating statistics about the RCS (radar cross section) values.

The RCS (feature) map 234 is provided as part of the output interface. The creation of the RCS map based on the same detections that are output by the detection creation paths ensures that the individual parts of the output interface (here: RCS map, detections) is based on the same data (consistency), and not just co-located.

The freespace calculation block 230 may calculate and provide information about the free space in the environment. **It** may describe evidence about absence of reflection points. The case of unknown environment (e.g. due to occlusion by an object) may also be described by the evidence formulation. The freespace calculation may use input from the detections in order to perform the occlusion identification.

As an input, this block needs mainly the range, range rate and beamvector data, and additionally the mounting orientation of each radar, intrinsic calibration data (for example including the antenna calibration matrix), and vehicle state estimation (speed, yaw rate, possibly sideslip).

As such, range, range rate and beamvector data are used as an input to radar free space calculation.

According to various embodiments, free space, detections and RCS feature map (which may for short be referred to as RCS map) may be based on the same data/data level (range, range rate and beamvector). This may make the entire output consistent. For example for the freespace calculation, it may be important that the detections used as input to this block are the same that are used by subsequent modules (outside of this architecture), to provide consistency.

With the method and system according to various embodiments, more and better detections may be provided which may provide better input to free space (occlusion handling) and may provide improved system by this connection. The region of interest may influence both the improved detections, and by this the occlusion handling on important regions, which may provide improved system by this connection. The architecture according to various aspects may improve computational efficiency. The RCS map may be improved due to better and more detections. The methods and system may enhance flexibility, since one of the detections paths may be optional. Functional safety may be provided, since estimates from different sources may be used, and thereby, safety may be increased. Functional safety may further be enhanced, since various functional safety classes are handled at detection level. According to various embodiments, usage of a weight instead of binary classification for stationary / moving identification of detections, and providing more than one estimate for a detection's angle may further improve the results.

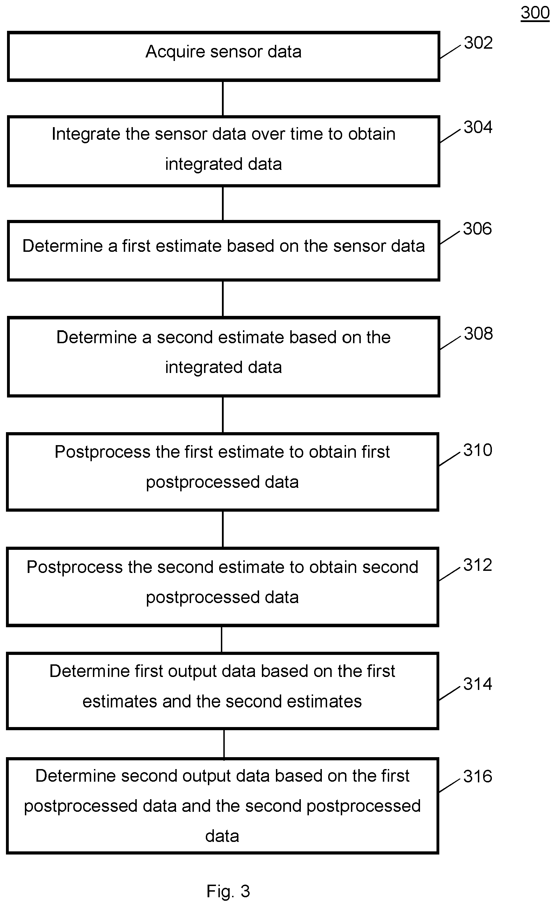

Fig. 3 shows a flow diagram 300 illustrating a method for determining a plurality of output data according to the invention as claimed.

At 302, sensor data are acquired. At 304, the sensor data are integrated over time to obtain integrated data. At 306, a first estimate is determined based on the sensor data. At 308, a second estimate is determined based on the integrated data. At 310, the first estimate may be postprocessed to obtain first postprocessed data. At 312, the second estimate may be postprocessed to obtain second postprocessed data. At 314, first output data may be determined based on the first estimates and the second estimates. At 316, second output data may be determined based on the first postprocessed data and the second postprocessed data.

According to various embodiments, the sensor data may include or may be range Doppler vectors.

According to various embodiments, the integrated data may include or may be a time integrated range Doppler beamvectors.

According to according to the claimed invention, the first estimate includes an angle estimate from Doppler with target motion and an angle estimate from beamvectors.

According to the invention as claimed, the postprocessing of the first estimate includes a stationary/ moving classification based on at least one of the angle estimates.

According to the invention as claimed, the second estimate includes an integrated angle estimate.

According to the invention as claimed, the postprocessing of the second estimate includes determining a stationary/ moving classification based on the integrated angle estimate.

According to the invention as claimed, the first output data include freespace information.

According to the invention as claimed the second output data may include or may be an RCS feature map.

According to various embodiments, the second output data may include or may be final detections with additional angle from Doppler and variance fields.

Each of the steps 302, 304, 306, 308, 310, 312, 314, 316 and the further steps described above may be performed by computer hardware components.

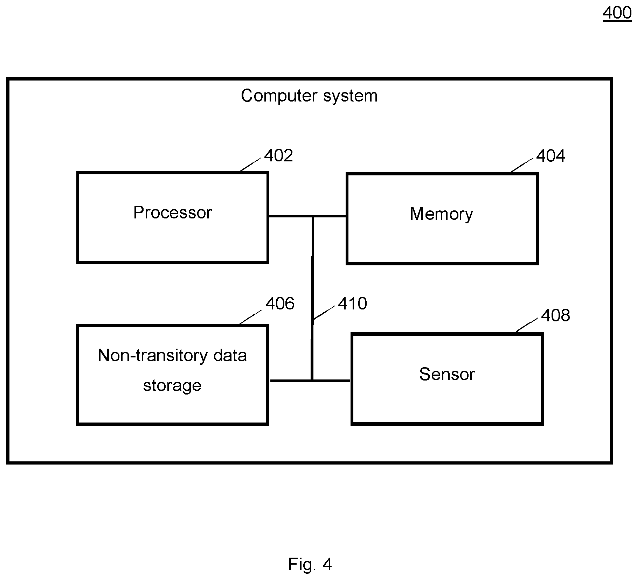

Fig. 4 shows a computer system 400 with a plurality of computer hardware components configured to carry out steps of a computer implemented method for determining a plurality of output data according to various embodiments. The computer system 400 may include a processor 402, a memory 404, and a non-transitory data storage 406. A sensor 408 may be provided as part of the computer system 400 (like illustrated in Fig. 4), or may be provided external to the computer system 400.

The processor 402 may carry out instructions provided in the memory 404. The non-transitory data storage 406 may store a computer program, including the instructions that may be transferred to the memory 404 and then executed by the processor 402. The sensor 408 (which may, for example, be a radar sensor) may be used to acquire the sensor data.

The processor 402, the memory 404, and the non-transitory data storage 406 may be coupled with each other, e.g. via an electrical connection 410, such as e.g. a cable or a computer bus or via any other suitable electrical connection to exchange electrical signals. The sensor 408 may be coupled to the computer system 400, for example via an external interface, or may be provided as parts of the computer system (in other words: internal to the computer system, for example coupled via the electrical connection 410).

The terms "coupling" or "connection" are intended to include a direct "coupling" (for example via a physical link) or direct "connection" as well as an indirect "coupling" or indirect "connection" (for example via a logical link), respectively.

**It** will be understood that what has been described for one of the methods above may analogously hold true for the computer system 400.

### Reference numeral list

- 100: illustration of a system according to various embodiments
- 102: sensing data
- 104: integration over time
- 106: instantaneous processing
- 108: time integrated sensing data
- 110: integrated processing
- 112: prior information
- 114: estimation using prior information
- 116: estimation (low dependencies)
- 118: estimation using time integration
- 120: joint estimation usage
- 122: multi safety / performance level estimates
- 124: integration estimation usage
- 126: multi safety / performance level estimates
- 128: direct combination of sensing data and multi safety / performance level estimates
- 130: first processed output
- 132: processing using multi safety / performance level estimates
- 134: second processed output
- 136: combined multi safety / performance level estimates

- 200: illustration of system, in which the system of Fig. 1 is applied to radar applications
- 202: range doppler beamvectors
- 204: integration over time/ motion
- 206: instantaneous detection
- 208: time integrated range Doppler beamvectors
- 210: integrated detection
- 212: target motion
- 214: angle estimation from Doppler with target motion
- 216: angle estimation from beamvector
- 218: integrated angle estimation
- 220: stationary / moving classification
- 222: instantaneous detections with moving indication
- 224: stationary / moving classification
- 226: improved detections with moving indication
- 228: freespace calculation with occlusion consideration
- 230: freespace
- 234: RCS feature map
- 236: final detections with additional angle from doppler and variance fields
- 238: module for converting coordinates into (x,y) vehicle coordinates
- 240: RCS features
- 242: integration over time

- 300: flow diagram illustrating a method for determining a plurality of output data
- 302: step of acquiring sensor data
- 304: step of integrating the sensor data over time to obtain integrated data
- 306: step of determining a first estimate based on the sensor data
- 308: step of determining a second estimate based on the integrated data
- 310: step of postprocessing the first estimate to obtain first postprocessed data
- 312: step of postprocessing the second estimate to obtain second postprocessed data
- 314: step of determining first output data based on the first estimates and the second estimates
- 316: step of determining second output data based on the first postprocessed data and the second postprocessed data

- 400: computer system according to various embodiments
- 402: processor
- 404: memory
- 406: non-transitory data storage
- 408: sensor
- 410: connection

## Claims

1. Computer implemented method for determining a plurality of output data, the method comprising the following steps carried out by computer hardware components:
- acquiring (302) sensor data using a radar sensor;
- integrating (304) the sensor data over time to obtain integrated data;
- determining (306) a first estimate based on the sensor data, the first estimate comprising angle estimates, the angle estimates comprising an angle estimate from Doppler with target motion and an angle estimate from beamvectors;
- determining (308) a second estimate based on the integrated data, the second estimate comprising an integrated angle estimate;
- postprocessing (310) the first estimate to obtain first postprocessed data, the postprocessing the first estimate comprising determining a stationary/ moving classification based on at least one of the angle estimates;
- postprocessing (312) the second estimate to obtain second postprocessed data, the postprocessing the second estimate comprising determining a stationary/ moving classification based on the integrated angle estimate;
- determining (314) first output data based on the first estimates and the second estimates, the first output data comprising freespace information which includes information about unoccupied environment; and
- determining (316) second output data based on the first postprocessed data and the second postprocessed data, the second output data comprising a radar cross section feature map.

2. The computer implemented method of claim 1,
wherein the freespace information describes evidence about absence of reflection points.

3. The computer implemented method of at least one of claims 1 to 2, wherein the sensor data comprise range Doppler beamvectors.

4. The computer implemented method of at least one of claims 1 to 3, wherein the integrated data comprises a time integrated range Doppler beamvectors.

5. The computer implemented method of at least one of claims 1 to 4, wherein the second output data further comprises final detections with additional angle from Doppler and variance fields, the final detections comprising combined multi safety / performance level estimates.

6. Computer system (400), the computer system (400) comprising a plurality of computer hardware components configured to carry out steps of the computer implemented method of at least one of claims 1 to 5.

7. Vehicle comprising the computer system (400) of claim 6 and the radar sensor of claim 1.

8. Non-transitory computer readable medium comprising for carrying out the computer implemented method of at least one of claims 1 to 5 when run on the computer system of claim 6.

## Patentansprüche

1. Computerimplementiertes Verfahren zum Bestimmen einer Vielzahl von Ausgangsdaten, wobei das Verfahren die folgenden Schritte umfasst, die von Computerhardwarekomponenten ausgeführt werden:
- Erfassen (302) von Sensordaten unter Verwendung eines Radarsensors;
- Integrieren (304) der Sensordaten über die Zeit, um integrierte Daten zu erhalten;
- Bestimmen (306) einer ersten Schätzung basierend auf den Sensordaten, wobei die erste Schätzung Winkelschätzungen umfasst, wobei die Winkelschätzungen eine Winkelschätzung aus Doppler mit Zielbewegung und eine Winkelschätzung aus Strahlvektoren umfassen;
- Bestimmen (308) einer zweiten Schätzung basierend auf den integrierten Daten, wobei die zweite Schätzung eine integrierte Winkelschätzung umfasst;
- Nachverarbeiten (310) der ersten Schätzung, um erste nachverarbeitete Daten zu erhalten, wobei das Nachverarbeiten der ersten Schätzung das Bestimmen einer Stationär/Bewegend-Klassifikation basierend auf mindestens einer der Winkelschätzungen umfasst;
- Nachverarbeiten (312) der zweiten Schätzung, um zweite nachverarbeitete Daten zu erhalten, wobei das Nachverarbeiten der zweiten Schätzung das Bestimmen einer Stationär/Bewegend-Klassifikation basierend auf der integrierten Winkelschätzung umfasst;
- Bestimmen (314) erster Ausgangsdaten basierend auf den ersten Schätzungen und den zweiten Schätzungen, wobei die ersten Ausgangsdaten Freirauminformationen umfassen, die Informationen über die unbelegte Umgebung enthalten; und
- Bestimmen (316) zweiter Ausgangsdaten basierend auf den ersten nachverarbeiteten Daten und den zweiten nachverarbeiteten Daten, wobei die zweiten Ausgangsdaten eine Radarquerschnittsmerkmalskarte umfassen.

2. Computerimplementiertes Verfahren nach Anspruch 1, wobei die Freirauminformationen Nachweise über das Fehlen von Reflexionspunkten beschreiben.

3. Computerimplementiertes Verfahren nach mindestens einem der Ansprüche 1 bis 2, wobei die Sensordaten Entfernungs-Doppler-Strahlvektoren umfassen.

4. Computerimplementiertes Verfahren nach mindestens einem der Ansprüche 1 bis 3, wobei die integrierten Daten zeitintegrierte Entfernungs-Doppler-Strahlvektoren umfassen.

5. Computerimplementiertes Verfahren nach mindestens einem der Ansprüche 1 bis 4, wobei die zweiten Ausgangsdaten ferner finale Erkennungen mit Zusatzwinkel-von-Doppler- und Varianzfeldern umfassen, wobei die finalen Erkennungen kombinierte Multi-Sicherheits-/Leistungsniveauschätzungen umfassen.

6. Computersystem (400), wobei das Computersystem (400) eine Vielzahl von Computerhardwarekomponenten umfasst, die konfiguriert sind, um Schritte des computerimplementierten Verfahrens nach mindestens einem der Ansprüche 1 bis 5 auszuführen.

7. Fahrzeug, umfassend das Computersystem (400) nach Anspruch 6 und den Radarsensor nach Anspruch 1.

8. Nichtflüchtiges computerlesbares Medium, umfassend Anweisungen zum Ausführen des computerimplementierten Verfahrens nach mindestens einem der Ansprüche 1 bis 5, wenn es auf dem Computersystem nach Anspruch 6 ausgeführt wird.

## Revendications

1. Procédé mis en œuvre par ordinateur pour déterminer une pluralité de données de sortie, le procédé comprenant les étapes suivantes exécutées par des composants matériels informatiques et consistant à :
- acquérir (302) des données de capteur à l'aide d'un capteur radar ;
- intégrer (304) les données de capteur dans le temps pour obtenir des données intégrées ;
- déterminer (306) une première estimation sur la base des données de capteur, la première estimation comprenant des estimations d'angle, les estimations d'angle comprenant une estimation d'angle à partir de l'effet Doppler par mouvement de cible et une estimation d'angle à partir de vecteurs de faisceaux ;
- déterminer (308) une deuxième estimation sur la base des données intégrées, la deuxième estimation comprenant une estimation d'angle intégrée ;
- post-traiter (310) la première estimation pour obtenir des premières données post-traitées, le post-traitement de la première estimation consistant à déterminer une classification stationnaire/mobile sur la base d'au moins une des estimations d'angle ;
- post-traiter (312) la deuxième estimation pour obtenir des deuxièmes données post-traitées, le post-traitement de la deuxième estimation consistant à déterminer une classification stationnaire/mobile sur la base de l'estimation d'angle intégrée ;
- déterminer (314) des premières données de sortie sur la base des premières estimations et des deuxièmes estimations, les premières données de sortie comprenant des informations d'espace libre qui incluent des informations sur l'environnement inoccupé ; et
- déterminer (316) des deuxièmes données de sortie sur la base des premières données post-traitées et des deuxièmes données post-traitées, les deuxièmes données de sortie comprenant une carte de caractéristiques de section efficace radar.

2. Procédé mis en œuvre par ordinateur selon la revendication 1,
dans lequel les informations d'espace libre décrivent des preuves de l'absence de points de réflexion.

3. Procédé mis en œuvre par ordinateur selon au moins l'une des revendications 1 à 2,
dans lequel les données de capteur comprennent des vecteurs de faisceaux Doppler de distance.

4. Procédé mis en œuvre par ordinateur selon au moins l'une des revendications 1 à 3,
dans lequel les données intégrées comprennent des vecteurs de faisceaux Doppler de distance intégrés dans le temps.

5. Procédé mis en œuvre par ordinateur selon au moins l'une des revendications 1 à 4,
dans lequel les deuxièmes données de sortie comprennent en outre des détections finales avec un angle supplémentaire provenant de champs Doppler et de variance, les détections finales comprenant des estimations de niveaux de sécurité/performance multiples combinées.

6. Système informatique (400), le système informatique (400) comprenant une pluralité de composants matériels informatiques configurés pour exécuter les étapes du procédé mis en œuvre par ordinateur selon au moins l'une des revendications 1 à 5.

7. Véhicule comprenant le système informatique (400) selon la revendication 6 et le capteur radar selon la revendication 1.

8. Support non transitoire lisible par ordinateur comprenant des instructions pour exécuter le procédé mis en œuvre par ordinateur selon au moins l'une des revendications 1 à 5 lorsqu'elles sont exécutées sur le système informatique selon la revendication 6.
